# EUROPEAN PATENT SPECIFICATION

(11) **EP 2 287 949 B1**
(45) Date of publication and mention of the grant of the patent: **16.05.2012**
(21) Application number: 09168237.7
(22) Date of filing: 20.08.2009
(51) Int. Cl.: H01M 4/86, H01M 8/10, H01M 8/18

(54) **Diffusion layers with a thin protection layer and a method of making the same**
Diffusionsschichten mit einer dünnen Schutzschicht und Verfahren zu deren Herstellung
Couches de diffusion dotées d'une fine couche de protection et leur procédé de fabrication

(43) Date of publication of application: 23.02.2011
(73) Proprietor: General Optics Corporation, Jhongli City T'ao yuan 32064 (TW)
(72) Inventor: Yang, Wen-hui, Taoyuan County 32064 (TW); Lin, Chun-chih, Taoyuan County 32064 (TW); Wu, Han-pin, Taoyuan County 32064 (TW); Shiu, Yu-jiun, Taoyuan County 32064 (TW); Fan, Jia-ci, Taoyuan County 32064 (TW)
(74) Representative: Jeannet, Olivier

(56) References cited:
- WO-A1-2008/073080
- CA-A1- 2 630 684

## Description

### BACKGROUND OF THE INVENTION

### 1. FIELD OF THE INVENTION

The present invention relates to diffusion layers with a thin protection layer and a method of making the same, in particular to diffusion layers made of carbon fabric, carbon paper, and graphite being coated with a thin protection layer on the surface thereof, so that the thin protection layer would prevent the carbon or the graphite from being corroded or damaged from active oxygen species.

### 2. Description of the Related Art

Since science and technology have been greatly developed for a recent hundred years, the global economic growth has advanced a lot, the society has been largely progressed, and the population has risen by a speedy expansion. Human need more and more resources, and their dependence on the resources grows with each passing day. Therefore, natural wealth on the Earth would become less day by day. Wherein, the fossil fuel is exhausted the most seriously and fast. Short in the future, human would definitely confront an energy crisis. If no alternative energy is found, the living of human would be hung over. Thus, all human must strive for the exploitation of alternative energy as an emergent mission.

Fuel cell attracts the most attention among various alternative energies. Fuel cell is a kind of power device that can directly convert chemical energy into electric energy. Wherein, the reactants essentially applied to the fuel cell are hydrogen and oxygen. Moreover, after a chemical reaction of the hydrogen and oxygen, electric current and water are accordingly generated. Since the fuel cell merely generates water after the reaction, the environment is preferably protected from the pollution. Besides the advantage of low pollution, the fuel cell is also favorable for little noise, high efficiency, long life, and extensive applications. Thus, fuel cell has become potential energy and an important issue to be widely investigated.

The electric current and water are electrochemically generated by utilizing hydrogen and oxygen in a fuel cell; reversely, if the water is electrolyzed, hydrogen and oxygen are accordingly generated. Wherein, the reaction that dissociates the water into hydrogen and oxygen is called electrolysis. Appropriate employment of the reversible reaction would make the reactants of the fuel cell, hydrogen and oxygen, constantly recycled and reused.

If one uses the conventional fuel cell for electrolysis, since an operative potential is higher (about 2.0 per cell), the diffusion layer in the fuel cell is facilely corroded by active oxygen species. Thus, the conventional fuel cell is unsuitable for electrolysis. That is because the diffusion layer in the fuel cell is mainly made from carbon products like carbon papers or carbon fabrics. Moreover, during the electrolysis, the oxygen electrode would generate the oxygen atom, hydroxyl free radicals, and other active oxygen species, and these active oxygen species readily combine with the carbon molecules on the diffusion layer to generate the carbon monoxide or carbon dioxide; thereby, the diffusion layer would lead to oxidization and become damaged. Thus, the conventional fuel cell and the electrolysis cell need to be separate, so that the fuel cell could mainly function as a power device, and the electrolysis cell could chiefly serve as a hydrogen and oxygen producer. Accordingly, a redundant space and installation concurrently confine the fuel cell to a limited application.

Therefore, the present invention endeavors to solve the problem that the diffusion layer in the fuel cell is easily corroded by decomposing into carbon monoxide or carbon dioxide. Whereby, the fuel cell of the present invention might serve as an electrolysis cell to proceed with the generation of the hydrogen and oxygen, so that the hydrogen and oxygen created by the electrolysis can be adapted to multiple industrial and consumer applications. Moreover, the functions of hydrogen and power generations could be preferably combined into a single cell.

WO 2008/073080 discloses a fuel cell comprising a catalysed protective layer between the cathode and the membrane.

### SUMMARY OF THE INVENTION

The object of the present invention is to provide diffusion layers with an enhanced shelter function so as to prevent the diffusion layers from the erosion and damage during electrolysis.

The present invention essentially utilizes diffusion layers having a surface coated with a thin protection layer, and the thin protection layer includes materials of a metal base with corrosion resistance and a highly active catalyst base. Moreover, the abovementioned bases can be in a form of powder, ink, or other arbitrary forms.

A method of making the present invention takes steps of coating a metal base with corrosion resistance on diffusion layers for being treated with a high temperature to form a firm structure. Continuingly, a highly active catalyst base would be further applied to the surface of the diffusion layers for an additional treatment with a temperature to shape a solid structure. Finally, a finished product is served as the present invention.

The metal base with corrosion resistance in the thin protection layer functions to diminish a contact area between carbon and an active oxygen species so as to complementarily coat the highly active catalyst base on the surface of the diffusion layers. Wherein, the highly active catalyst would preferably catalyze the active oxygen species into non-active oxygen.

Therefore, the thin protection layer well averts the diffusion layers made of carbon from being corroded and damaged by the active oxygen species. As a result, the fuel cell of the present invention could employ a direct mutual reaction, namely electrolysis, to serve as a device for producing hydrogen and oxygen. While alternatively combining the electric energy, a dual-purpose-device would be served to recycle the resources and minimize the equipment dimension, and the developing cost would be favorably reduced, too.

### BRIEF DESCRIPTION OF THE DRAWINGS

Fig. 1 is a cross-sectional view showing a conventional fuel cell;
Fig. 2 is a cross-sectional view showing a preferred embodiment of the present invention used as a fuel cell;
Fig. 3 is a cross-sectional view showing another preferred embodiment of the present invention used as an electrolysis cell;
Fig. 4 is a flow chart showing a method of making the present invention; and
Fig. 5 is a cross-sectional view showing a thin protection layer coated on a surface of a diffusion layer of the present invention.

### DESCRIPTION OF ELEMENTS IN THE DRAWINGS

- 1: main body
- 11: hydrogen/water opening
- 12: oxygen/water opening
- 13: oxygen/water open ing
- 14: hydrogen/water opening
- 2: end plate
- 2': end plate
- 3: current collector
- 3': current collector
- 4: flow-field plate
- 4': flow-field plate
- 5: diffusion layer
- 5': diffusion layer
- 51: thin protection layer
- 6: catalyst layer
- 6': catalyst layer
- 7: proton exchange membrane
- 8: circuit unit
- 9: finished product
- 91: diffusion layer
- 92: coating step
- 93: a high temperature treating step
- 94: recoating step
- 95: a temperature treating step
- 96: thin protection layer
- 961: metal base with corrosion resistance
- 962: highly active catalyst base

### DETAILED DESCRIPTION OF THE PREFERRED EMBODIMENTS

The present invention will become more apparent by reading the following descriptions with the relating drawings.

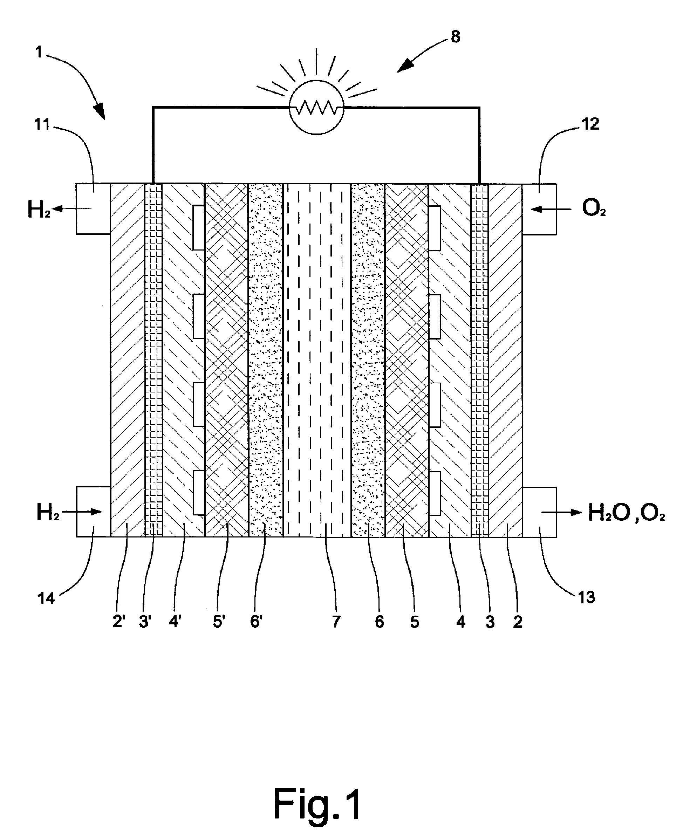

Referring to Fig. 1, an inner structure of a conventional fuel cell, a main body 1 comprises end plates 2, 2', current collectors 3, 3', flow-field plates 4, 4', diffusion layers 5, 5', catalyst layers 6, 6', a proton exchange membrane 7, and a circuit unit 8. Wherein, the main body 1 further includes hydrogen/water openings 11, 14 as well as oxygen/water openings 12, 13 for the reactants and water to pass therein and thereout. Moreover, the diffusion layers 5, 5' would assist reactants to evenly diffuse, to smoothly pass through, and to conduct electrons, so that a more efficient reaction for the reactants and the catalyst layers 6, 6' can be achieved. Herein, the diffusion layers 5, 5' adopt carbon paper or cloth that is made of "carbon".

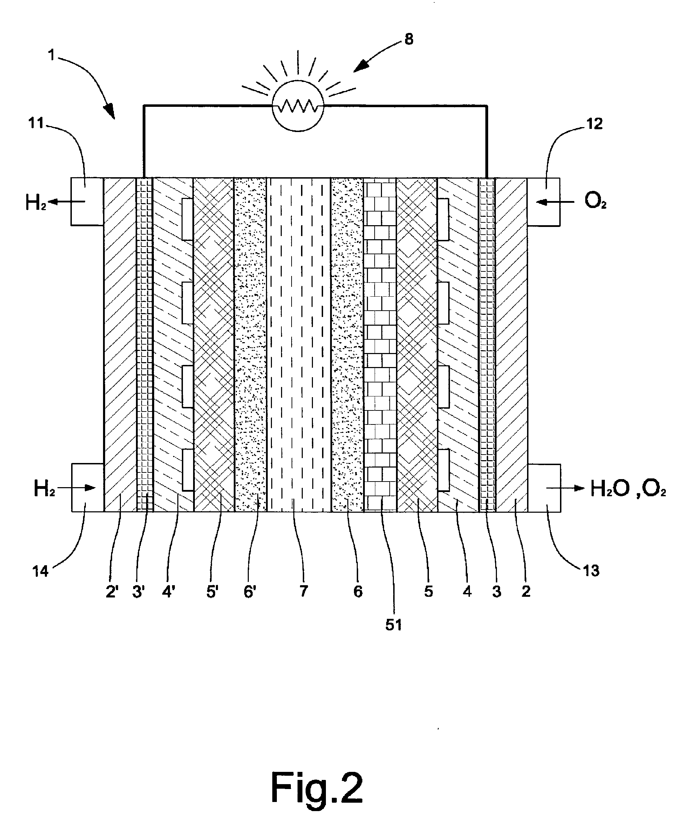

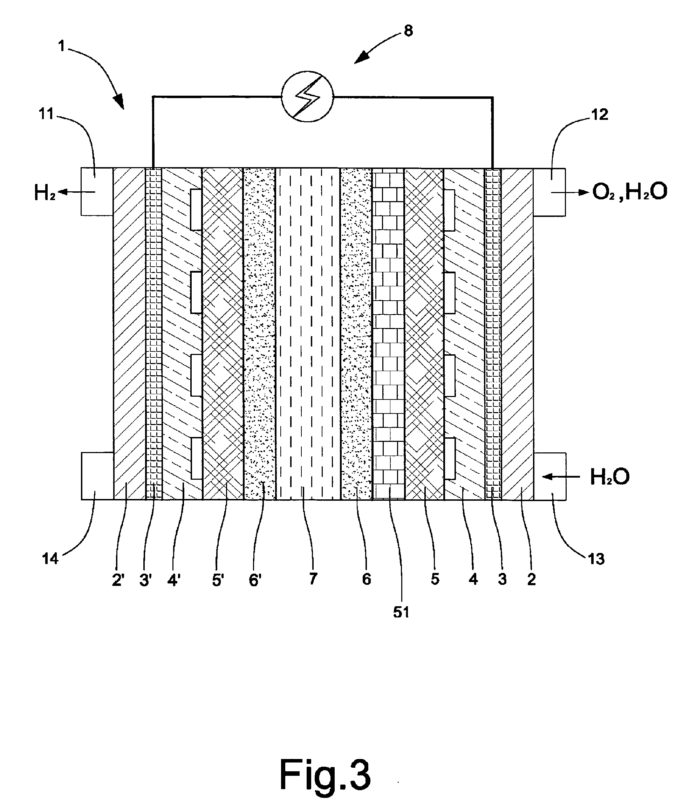

Referring to Figs. 2 and 3, in the main body 1 of the fuel cell of the present invention disposes the diffusion layer 5 near the side of the oxygen/water openings 12, 13. Moreover, the diffusion layer 5 is further coated with a thin protection layer 51. Wherein, the thin protection layer 51 is formed between the diffusion layer 5 and the catalyst layer 6.

A preferred embodiment as shown by Fig. 3 for applying to a water electrolysis cell de-ionized, the water would get into the main body 1 from the oxygen/water opening 13 to the catalyst layer 6; wherein, the circuit unit 8 would provide the power for electrolysis. Water is electrolytically decomposed into oxygen and hydrogen ion at catalyst layer 6 of a positive (oxygen) electrode. Whereby, the oxygen would be discharged from the oxygen/water opening 12. Additionally, the hydrogen ion would get through the proton exchange membrane 7 to the catalyst layer 6' of a negative (hydrogen) electrode so as to combine with an electron and generate the hydrogen. Finally, the hydrogen would be discharged from the hydrogen/water opening 11. A thin protection layer 51 comprises a highly active catalyst base and a metal base with corrosion resistance. The highly active catalyst base could catalyze the active oxygen species into non-active oxygen, and the metal base with corrosion resistance would preferably reduce a contact area between the carbon and the active oxygen species. Accordingly, By means of the thin protection layer 51 being coated on the surface of the diffusion layer 5, the diffusion layer 5 can be superiorly protected.

Fig. 2 shows another preferred embodiment of the present invention applied to a fuel cell. When the hydrogen is introduced into the main body 1 from the hydrogen /water opening 14, it would sequentially pass through the end plate 2', the current collector 3', the flow-field plate 4', the diffusion layer 5', and the catalyst layer 6'. Wherein, the catalyst layer 6' would assist the dissociation of the hydrogen into hydrogen ions and electrons. Moreover, the hydrogen ions would be conducted by the proton exchange membrane 7 to the oxygen electrode, and the electrons would pass through the circuit unit 8 to the oxygen electrode to form an electric current. Furthermore, the oxygen would get into the main body 1 from the oxygen /water opening 12 for evenly distributed over the catalyst layer 6 after sequentially getting through the end plate 2, the current collector 3, the flow-field plate 4, the diffusion layer 5, and the catalyst layer 6. Thereby, the oxygen can react with the hydrogen ion and the electrons in the catalyst layer 6 to form a liquid water to be discharged from the oxygen/water opening 13.

The present invention employs the thin protection layer 51 coated on the surface of the diffusion layer 5 to achieve the object of efficiently protecting the diffusion layer 5 from damage. Therefore, the present invention is well adapted to an electrolysis device. Moreover, a single cell would simultaneously possess the function of a fuel cell for producing electricity, which is novel and conduces to the benefits of an economical space, reduced costs, and a prolonged life for patentability.

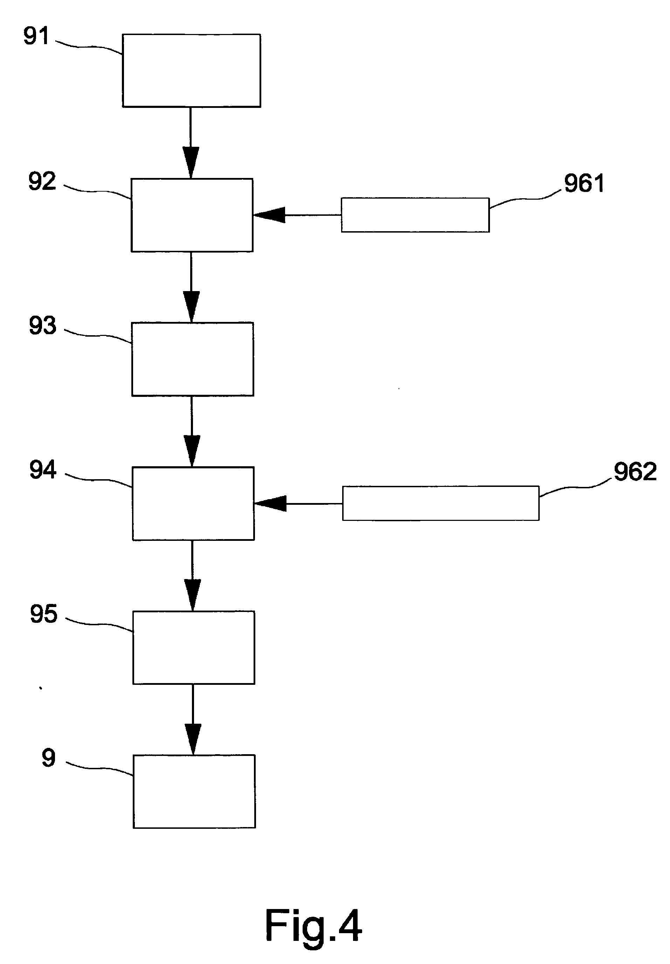

Referring to Fig. 4, the method of making a diffusion layer having a thin protection layer comprises:
(a) a preparing step that prepares a diffusion layer 91 as a basic material;
(b) a coating step 92 that coats a metal base with corrosion resistance 961 on an surface of the diffusion layer 91; wherein, the coating step 92 could adopt one of the following means: spraying, inkjet, sputtering, evaporation, lamination, or electroplate;
(c) a high temperature treating step 93 that applies a high temperature to the diffusion layer 91 after proceeded to the coating step 92 with the metal base with corrosion resistance 961, so that the metal base with corrosion resistance 961 could be adhered to the surface of the diffusion layer 91;
(d) a recoating step 94 that coats a highly active catalyst base 962 on the surface of the diffusion layer 91 that is proceeded to the high temperature treating step 93; the coating step 94 could adopt one of the following means: spraying, inkjet, sputtering, evaporation, lamination, or electroplate; and
(e) a temperature treating step 95 that applies a temperature to the diffusion layer 91 after proceeded to the coating step 94 with the highly active catalyst base 962, so that the highly active catalyst base 962 could be adhered to the surface of the diffusion layer 91.

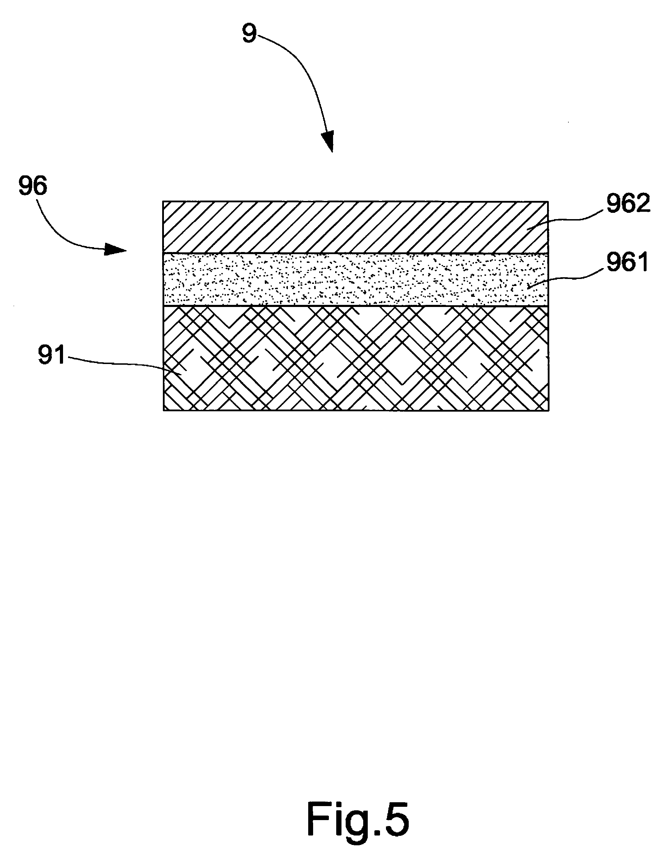

While executing the above steps, the diffusion layer 91 becomes a finished product 9 that is coated with the thin protection layer 96 (as shown by Fig. 5).

The diffusion layer 91 coated with the thin protection layer 96 is similar to the conventional diffusion layer when it is applied to the fuel cell. However, when the present invention is applied to electrolysis, the thin protection layer 96 would provide the diffusion layer 91 with a double protective function. Wherein, the external highly active catalyst base 962 would firstly catalyze the active oxygen species into non-active oxygen to serve as a first protection. Secondly, the inner metal base with corrosion resistance 961 would delay, reduce, or obstruct the active oxygen species that has not been catalyzed into non-active oxygen from contacting the diffusion layer 91. As a result, the carbon contained in the diffusion layer 91 would not be facilely decomposed to incur the corrosion and damage, which serves as a second protection.

To sum up, the thin protection layer 96 provides the double protection for a single cell to produce not only electricity but also hydrogen and/or oxygen. Therefore, the present invention functions as a dual-purpose device to achieve the objective and efficiency of recycling and reusing resources, reducing the equipment dimension, and lowering the system cost.

## Claims

1. Diffusion layers (5, 5', 91) for a fuel cell and/or an electrolysis device, **characterized in that** said diffusion layers (5, 5', 91) are coated with a thin protection layer (51, 96) on a surface thereof;
said diffusion layers (5, 5', 91) allowing a reactant to be diffused evenly; and
said thin protection layers (51, 96) including a metal base with corrosion resistance (961) and a highly active catalyst base (962).

2. The diffusion layers as claimed in claim 1, **characterized in that** said diffusion layers (5, 5', 91) adopt either carbon fabric, carbon paper, or graphite.

3. The diffusion layers as claimed in claim 1, **characterized in that** said metal base with corrosion resistance (961) is directed to a metal material.

4. The diffusion layers as claimed in claim 1, **characterized in that** said high-activated catalyst base (962) could catalyze an active oxygen species into non-active oxygen.

5. The diffusion layers as claimed in claim 1, **characterized in that** said diffusion layers (5, 5', 91) are applied to electrolysis device.

6. The diffusion layers as claimed in claim 1, **characterized in that** said diffusion layers (5, 5', 91) are applied to a 2-in-1 fuel cell and electrolysis device.

7. A method of making a diffusion layer with a thin protection layer **characterized in that** it includes:
(a) a preparing step that prepares a diffusion layer (91);
(b) a coating step (92) that coats a metal base with corrosion resistance (961) on a surface of said diffusion layer (91);
(c) a high temperature treating step (93) that applies a high temperature treatment to said diffusion layer 91 coated with said metal base with corrosion resistance (961);
(d) a recoating step (94) that coats a highly active catalyst base (962) on said surface of said diffusion layer (91);
(e) a temperature treating step (95) that applies a temperature treatment to said diffusion layer (91) coated with said highly active catalyst base (962).

8. The method of making a diffusion layer as claimed in claim 7, **characterized in that** said coating steps (92, 94) adopt one of following means: spraying, inkjet, sputtering, evaporation, lamination, or electroplate.

## Patentansprüche

1. Diffusionsschichten (5, 5', 91) für eine Brennstoffzelle und/oder eine Elektrolysevorrichtung, **dadurch gekennzeichnet, dass** die Diffusionsschichten (5, 5', 91) mit einer dünnen Schutzschicht (51, 96) auf einer Oberfläche der Diffusionsschichten (5, 5', 91) beschichtet sind;
die Diffusionsschichten (5, 5', 91) es einem Reaktanden ermöglichen gleichmäßig diffundiert zu werden; und
die dünnen Schutzschichten (51, 96) eine Metallbasis mit Korrosionsbeständigkeit (961) und eine hochaktive Katalysatorbasis (962) enthalten.

2. Diffusionsschichten gemäß Anspruch 1, **dadurch gekennzeichnet, dass** die Diffusionsschichten (5, 5', 91) entweder ein Kohlenstoffgewebe, ein Kohlenstoffpapier oder Graphit aufweisen.

3. Diffusionsschichten gemäß Anspruch 1, **dadurch gekennzeichnet, dass** die Metallbasis mit Korrosionsfestigkeit (961) auf ein metallisches Material gerichtet ist.

4. Diffusionsschichten gemäß Anspruch 1, **dadurch gekennzeichnet, dass** die hochaktivierte Katalysatorbasis (962) eine aktive Sauerstoffspezies zu inaktiven Sauerstoff katalysieren kann.

5. Diffusionsschichten gemäß Anspruch 1, **dadurch gekennzeichnet, dass** die Diffusionsschichten (5, 5', 91) für die Elektrolysevorrichtung verwendet sind.

6. Diffusionsschichten gemäß Anspruch 1, **dadurch gekennzeichnet, dass** die Diffusionsschichten (5, 5', 91) für eine 2-in-1 Brennstoffzelle und die Elektrolysevorrichtung verwendet sind.

7. Verfahren zum Herstellen einer Diffusionsschicht mit einer dünnen Schutzschicht, **dadurch gekennzeichnet, dass** es aufweist:
(a) einen Bereitstellungsschritt, der eine Diffusionsschicht (91) bereitstellt;
(b) einen Beschichtungsschritt (92), der eine Metallbasis mit Korrosionsfestigkeit (961) auf eine Oberfläche der Diffusionsschicht (91) aufträgt;
(c) einen Hochtemperaturbehandlungsschritt (93), der eine Hochtemperaturbehandlung für die mit der Metallbasis mit Korrosionsfestigkeit (961) beschichteten Diffusionsschicht (91) verwendet;
(d) einen Wiederbeschichtungsschritt (94), der eine hochaktive Katalysatorbasis (962) auf die Oberfläche der Diffusionsschicht (91) aufträgt;
(e) einen Temperaturbehandlungsschritt (95), der eine Temperaturbehandlung für die Diffusionsschicht (91) mit der hochaktiven Katalysatorbasis (962) verwendet.

8. Verfahren gemäß Anspruch 7, **dadurch gekennzeichnet, dass** die Beschichtungsschritte (92, 94) eines der folgenden Mittel aufweisen: Sprühen, Tintenstrahl, Sputtern, Verdampfung, Laminierung oder Galvanisieren.

## Revendications

1. Couches de diffusion (5, 5', 91) pour une pile à combustible et / ou un dispositif d'électrolyse, **caractérisées en ce que** lesdites couches de diffusion (5, 5', 91) sont revêtues d'une fine couche de protection (51, 96) sur une surface de celles-ci ;
lesdites couches de diffusion (5, 5', 91) permettant qu'un réactif se diffuse uniformément, et
lesdites couches de protection minces (51, 96) incluent une base métallique (961) résistante à la corrosion et une base formant un catalyseur (962) hautement actif.

2. Couches de diffusion selon la revendication 1, **caractérisées en ce que** lesdites couches de diffusion (5, 5', 91) incluent l'utilisation soit de tissu en carbone, soit de papier au carbone, soit de graphite.

3. Couches de diffusion selon la revendication 1, **caractérisées en ce que** ladite base métallique (961) résistante à la corrosion est dirigé vers un matériau métallique.

4. Couches de diffusion selon la revendication 1, **caractérisées en ce que** ledit base formant un catalyseur (962) hautement actif peut catalyser une espèce à oxygène actif dans de l'oxygène non-actif.

5. Couches de diffusion selon la revendication 1, **caractérisées en ce que** lesdites couches de diffusion (5, 5', 91) sont appliqués à un dispositif d'électrolyse.

6. Couches de diffusion selon la revendication 1, **caractérisées en ce que** lesdites couches de diffusion (5, 5', 91) sont appliquées à un ensemble 2-en-1 pile à combustible dispositif d'électrolyse.

7. Procédé de fabrication d'une couche de diffusion ayant une couche de protection mince **caractérisé en ce qu'**il comporte :
(a) une étape de préparation qui prépare une couche de diffusion (91) ;
(b) une étape d'application (92) qui applique une base métallique (961) résistante à la corrosion sur une surface de ladite couche de diffusion (91) ;
(c) une étape de traitement à haute température (93) qui applique un traitement à haute température à ladite couche de diffusion (91) revêtue de ladite base métallique (961) résistante à la corrosion ;
(d) une nouvelle étape d'application (94) qui applique une base (962) formant un catalyseur hautement actif sur ladite surface de ladite couche de diffusion (91) ;
(e) une étape de traitement thermique (95) qui applique un traitement thermique à ladite couche de diffusion (91) revêtue de ladite base (962) formant un catalyseur hautement actif.

8. Procédé de fabrication d'une couche de diffusion selon la revendication 7, **caractérisées en ce que** lesdites étapes d'application (92, 94) incluent l'utilisation de l'un des moyens suivants : pulvérisation, jet d'encre, pulvérisation cathodique, évaporation, laminage, ou électroplacage.
